(19) **Europäisches Patentamt / European Patent Office / Office européen des brevets**

(11) **EP 4 145 582 A1**

(12) **EUROPEAN PATENT APPLICATION**
published in accordance with Art. 153(4) EPC

(43) Date of publication:
**08.03.2023 Bulletin 2023/10**

(21) Application number: **21916639.4**

(22) Date of filing: **31.05.2021**

(51) International Patent Classification (IPC):
**H01M 10/0587** (2010.01) **H01M 10/0567** (2010.01)

(86) International application number:
**PCT/CN2021/097528**

(87) International publication number:
**WO 2022/252093** (08.12.2022 Gazette 2022/49)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Fujian 352100 (CN)**

(72) Inventors:
• **ZOU, Hailin**
**Ningde**
**Fujian 352100 (CN)**
• **CHEN, Peipei**
**Ningde**
**Fujian 352100 (CN)**
• **PENG, Chang**
**Ningde**
**Fujian 352100 (CN)**
• **LIANG, Chengdu**
**Ningde**
**Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **LITHIUM ION BATTERY, BATTERY MODULE, BATTERY PACK AND ELECTRIC APPARATUS**

(57) The present application provides a lithium-ion battery, comprising: an electrode assembly and an electrolyte solution, wherein the electrode assembly comprises a negative electrode sheet, a separator and a positive electrode sheet, which are wound into a wound structure in a winding direction, and wherein the wound structure comprises an arc bending portion; the arc bending portion at least comprises: a first bending portion and a second bending portion; a corner lithium plating coefficient $\beta$ of the lithium-ion battery is set to satisfy $0.015 \leq \beta = R/(R+L) \leq 0.95$, wherein R is a minimum curvature radius of a convex surface of a negative electrode current collector of the first bending portion, and L is a shortest distance between the convex surface of the negative electrode current collector of the first bending portion and a concave surface of a positive electrode current collector of the second bending portion; the electrolyte solution contains a fluorosulfonate salt and/or difluorophosphate salt substance; and a percentage mass content w% of the fluorosulfonate salt and/or difluorophosphate salt substance in the electrolyte solution and the corner lithium plating coefficient $\beta$ satisfy $0.01 \leq w \times \beta \leq 20$. According to the lithium-ion battery of the present application, a high energy density and the problem of negative electrode lithium plating under the high energy density can be balanced.

FIG. 1

EP 4 145 582 A1

**Description**

**Technical Field**

The present application relates to the field of electrochemical batteries, in particular to a lithium-ion battery, a battery module, a battery pack and a powered device.

**Background Art**

Lithium-ion batteries become the most popular energy storage system due to their characteristics of high working potential, long service life and environment friendliness, and have now been widely applied to fields such as all-electric vehicles, hybrid electric vehicles, and smart grids. However, current lithium-ion batteries can barely meet people's higher demands in their battery's life, and there is in an urgent need to develop lithium-ion batteries with the higher energy density to solve the problem of "range anxiety" of people with regard to electric vehicles.

However, for a lithium-ion battery having a wound structure, with increased energy density of the designed battery, lithium plating occurs easily at winding corners of a negative electrode sheet. The continuously generated lithium dendrites pierce the separator, causing short circuits of the battery, and degrade the safety performance of the battery.

As can be seen, the increased energy density of the wound battery and the prevention of lithium plating are contradictory to each other. Thus, it is urgent to design and develop a lithium-ion battery with a high energy density and capable of effectively preventing the lithium plating.

**Summary of the Invention**

The present application is accomplished for solving the problems existing in the prior art. An objective of the present application is to develop and design a lithium-ion battery which can significantly improve an energy density of a battery having a wound structure, prevent corner lithium plating of a negative electrode sheet under a high energy density, and improve the electrochemical performance and safety performance of the battery.

To achieve the above objective, the present application provides a lithium-ion battery, comprising: an electrode assembly; and an electrolyte solution for impregnating the electrode assembly, wherein

the electrode assembly comprises a negative electrode sheet, a separator and a positive electrode sheet, and the negative electrode sheet, the separator and the positive electrode sheet are wound into a wound structure in a winding direction, and wherein the wound structure comprises an arc bending portion;
the arc bending portion at least comprises: a first bending portion and a second bending portion;
the first bending portion is an innermost arc bending portion formed by winding the negative electrode sheet, and comprises a negative electrode current collector and a negative electrode material layer at least located on a convex surface of the negative electrode current collector;
the second bending portion is located on an outer side of the first bending portion and adjacent to the first bending portion with the separator being therebetween, and comprises a positive electrode current collector and a positive electrode material layer at least located on a concave surface of the positive electrode current collector;
a corner lithium plating coefficient of the lithium-ion battery is set to be $\beta$, and $\beta$ satisfies the following formula I:

$$\beta = R/(R+L) \qquad \text{formula I,}$$

and $0.015 \leq \beta \leq 0.95$, wherein
R is a minimum curvature radius of the convex surface of the negative electrode current collector of the first bending portion, and
L is a shortest distance between the convex surface of the negative electrode current collector of the first bending portion and the concave surface of the positive electrode current collector of the second bending portion;
the electrolyte solution contains a fluorosulfonate salt and/or difluorophosphate salt substance; and
a percentage mass content w% of the fluorosulfonate salt and/or difluorophosphate salt substance in the electrolyte solution and the corner lithium plating coefficient $\beta$ satisfy the following formula II:

$$0.01 \leq w \times \beta \leq 20 \qquad \text{formula II.}$$

When w and $\beta$ of the lithium-ion battery meet the above conditions, the designed and developed lithium-ion battery can balance the high energy density and the situation of negative electrode convex surface lithium plating under the high energy density at the same time, thereby improving the electrochemical performance and safety performance of the battery.

For the lithium-ion battery of the present application, $0.2 \leq w \times \beta \leq 5$ is preferred. When w and $\beta$ meet the condition, the energy density of the battery can be further increased, and the situation of negative electrode convex surface lithium plating can be relieved.

For the lithium-ion battery of the present application, $0.15 \leq \beta \leq 0.8$ is preferred. When $\beta$ is controlled within the given range, the energy density and negative electrode convex surface lithium plating of the battery can be further improved.

For the lithium-ion battery of the present application, R is in a range of 2 $\mu$m to 5000 $\mu$m, optionally, a preferred range of 50 $\mu$m to 500 $\mu$m. When R is controlled within the given range, the energy density and negative electrode convex surface lithium plating of the battery can be further improved.

For the lithium-ion battery of the present application, L is in a range of 20 $\mu$m to 900 $\mu$m, optionally, a preferred range of 50 $\mu$m to 500 $\mu$m. When L is controlled within the given range, the energy density, negative electrode convex surface lithium plating and power performance (a lower internal resistance of the battery) of the battery can be further improved.

For the lithium-ion battery of the present application, a structural formula of the fluorosulfonate salt is $(FSO_3)_x M^{x+}$, wherein $M^{x+}$ is selected from one or two more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$, and

a structural formula of the difluorophosphate salt is $(F_2PO_2)_y M^{y+}$, wherein $M^{y+}$ is selected from one or two more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

For the lithium-ion battery of the present application, the percentage mass content w% of the fluorosulfonate salt and/or difluorophosphate salt substance in the electrolyte solution has a range of 0.02% to 25%, preferably a range of 0.02% to 20%, optionally, a more preferred range of 0.05% to 10%, and further optionally, a preferred range of 0.1% to 5%. When w is controlled within the given range, the energy density, negative electrode convex surface lithium plating and power performance (a lower internal resistance of the battery) of the battery can be further improved.

For the lithium-ion battery of the present application, the electrolyte solution preferably further contains fluoroethylene carbonate. Thus, the normal temperature cycling performance and high temperature cycling performance of the battery can be further improved.

For the lithium-ion battery of the present application, a porosity of the negative electrode material layer is 20% to 50%, further optionally 30% to 50%. Thus, the energy density and negative electrode convex surface lithium plating of the battery can be further improved.

The present application further provides a battery module, which is characterized by comprising the lithium-ion battery of the present application.

The present application further provides a battery pack, which is characterized by comprising one or more of the lithium-ion battery of the present application or the battery module of the present application.

The present application further provides a powered device, which is characterized by comprising one or more of the lithium-ion battery of the present application, the battery module of the present application, or the battery pack of the present application.

[Invention Effects]

According to the lithium-ion battery obtained in the present application, not only can the energy density of the battery increased, but also the situation of lithium plating of the battery with the high energy density can be further improved. In other words, according to the invention of the present application, a high-energy-density wound lithium-ion battery with negative electrode convex surface corner lithium plating at the innermost circle inhibited can be obtained. Although the lithium-ion battery of the present application is of a high-energy-density wound structure, negative electrode convex surface corner lithium plating at the innermost circle can be inhibited with the specific technical features above, and thus abnormal capacity utilization is inhibited, and safety of the lithium-ion battery can be further improved.

Here, it should be understood that the above general description and the following detailed description are only exemplary and can not limit the present application.

## Description of Drawings

Fig. 1 is a schematic view of an arc bending portion of an electrode assembly of a lithium-ion battery according to an embodiment of the present application.

Fig. 2 is a schematic view of a lithium-ion battery according to an embodiment of the present application.

Fig. 3 is an exploded view of the lithium-ion battery according to an embodiment of the present application shown in Fig. 1.

Fig. 4 is a schematic view of a battery module according to an embodiment of the present application.

Fig. 5 is a schematic view of a battery pack according to an embodiment of the present application.

Fig. 6 is an exploded view of the battery pack according to an embodiment of the present application shown in Fig. 5.

Fig. 7 is a schematic view of a device with a lithium-ion battery as a power source according to an embodiment of the present application.

Description of reference numerals:

1 Battery pack
2 Upper box
3 Lower box
4 Battery module
5 Lithium-ion battery
51 Case
52 Electrode assembly
53 Top cover assembly
6 Arc bending portion
61 Separator
62 Negative electrode current collector
62a, 62b Negative electrode material layer
63 Positive electrode current collector
63a, 63b Positive electrode material layer

**Detailed Description**

The present application is further described below in combination with the accompanying drawings and examples.

In the following, embodiments of a lithium-ion battery, a battery module, a battery pack and a device of the present application are specifically disclosed by properly referring to the detailed description of the accompanying drawings. However, there will be the case of omitting unnecessary detailed description. For example, there will be the case of omitting the detailed description of the well-known matters and the repeated description of the actual same structure. This is to avoid the following description becoming unnecessarily lengthy and facilitate the understanding of those skilled in the art. In addition, the drawings and the following description are provided for those skilled in the art to fully understand the present application, and are not intended to limit the subject matter recorded in the claims.

For simplicity, the present application specifically discloses some numerical ranges. However, any lower limit can be combined with any upper limit to form an unspecified range; and any lower limit can be combined with other lower limits to form an unspecified range, and similarly, any upper limit can be combined with any other upper limits to form an unspecified range. In addition, each separately disclosed point or single value itself can be combined with any other points or single values as a lower limit or upper limit, or with other lower limits or upper limits to form an unspecified range.

In the present application, an outer surface of a negative electrode current collector is called "a convex surface of the negative electrode current collector", that is, "the convex surface of the negative electrode current collector" is a face of a side of the negative electrode current collector away from a winding center. In the present application, an inner surface of the negative electrode current collector is called "a concave surface of the negative electrode current collector", that is, "the concave surface of the negative electrode current collector" is a face of a side of the negative electrode current collector close to the winding center.

In the present application, an outer surface of a positive electrode current collector is called "a convex surface of the positive electrode current collector", that is, "the convex surface of the positive electrode current collector" is a face of a side of the positive electrode current collector away from the winding center. In the present application, an inner surface of the positive electrode current collector is called "a concave surface of the positive electrode current collector", that is, "the concave surface of the positive electrode current collector" is a face of a side of the positive electrode current collector close to the winding center.

As described above, in the present application, to facilitate the description, for surfaces, located on arc bending portions, of "a positive electrode", "a negative electrode", "current collectors" and "separators", inner surfaces, i.e., the surfaces of sides close to the winding center are called "concave surfaces", and outer surfaces, i.e., the surfaces of sides away from the winding center are called "convex surfaces".

The present application relates to a wound lithium-ion battery with a high energy density and without lithium plating.

The lithium-ion battery formed by winding has a wound structure constituted from inside to outside according to an order of negative electrode-separator-positive electrode-separator-negative electrode-separator-positive electrode, the wound structure has unavoidable arc bending portions (two ends of the wound structure), and thus, in the arc bending portions, for each pair of negative electrodes and positive electrodes adjacent to the convex surfaces of the negative electrodes, curvature radiuses of the convex surfaces of the negative electrodes are greater than those of the concave surfaces of the adjacent positive electrodes, that is, lengths of the concave surfaces of the positive electrodes are greater than lengths of the convex surfaces of the corresponding negative electrodes. In this way, in the case that the capacity utilization of positive and negative electrode sheet materials per unit area is consistent, the capacity of a negative electrode sheet will be lower than that of the positive electrode in the arc bending portions, so that a negative electrode material can not fully receive lithium ions migrated from the positive electrode during charging, and the excess lithium ions "gather" on the surface of the negative electrode, and as the battery is charged, the "gathered" lithium ions obtain electrons to form lithium metal and gradually deposit into lithium dendrites (i.e., the corner lithium plating). The formed lithium dendrites are prone to piercing the separators, leading to short circuits of the positive and negative electrodes, which causes thermal runaway of the battery and brings potential safety hazards.

In order to increase the energy density of the wound lithium-ion battery, the inventor of the present application found that increasing coating thicknesses of positive and negative electrode materials and decreasing the number of circles of initial empty wound separators is an effective and feasible solution. However, based on a great amount of experiments, the inventor of the present application found that the greater the coating thicknesses of the positive and negative electrode materials on the positive and negative electrode sheets, the fewer the number of circles of the initial empty wound separators, and the more serious the lithium plating on the negative electrode sheets (especially the negative electrode sheet of the innermost circle) in the arc bending portions. Thus, in the wound lithium-ion battery, increasing the energy density by adding active materials is contradictory to prevention of the lithium plating, that is, the safety performance of the battery will be degraded while increasing the energy density of the battery.

On this basis, the present application designs and develops a lithium-ion battery with a high energy density and, in various aspects, without lithium plating, comprehensively regulating a wound structure itself, coating thicknesses of electrode sheets, electrolyte solution components and the like. The lithium-ion battery of the present application has good electrochemical performance and safety performance. Secondly, the theoretical relationship proposed in the present application is not limited to the design of one battery structure, and when the shape of a battery and the winding mode of a bare battery cell are changed due to other needs, the theoretical relationship is also applicable.

[Lithium-ion battery]

The present application provides a lithium-ion battery, comprising: an electrode assembly and an electrolyte solution for impregnating the electrode assembly, wherein

the electrode assembly comprises a negative electrode sheet, a separator and a positive electrode sheet, and the negative electrode sheet, the separator and the positive electrode sheet are wound into a wound structure in a winding direction, and wherein the wound structure comprises an arc bending portion;

the arc bending portion at least comprises: a first bending portion and a second bending portion;

the first bending portion is an innermost arc bending portion formed by winding the negative electrode sheet, and comprises a negative electrode current collector and a negative electrode material layer at least located on a convex surface of the negative electrode current collector;

the second bending portion is located on an outer side of the first bending portion and adjacent to the first bending portion with the separator being therebetween, and comprises a positive electrode current collector and a positive electrode material layer at least located on a concave surface of the positive electrode current collector;

a corner lithium plating coefficient of the lithium-ion battery is set to be β, and β satisfies the following formula I:

$$\beta = R/(R+L) \qquad \text{formula I,}$$

and $0.015 \leq \beta \leq 0.95$, wherein

R is a minimum curvature radius of the convex surface of the negative electrode current collector of the first bending portion, and

L is a shortest distance between the convex surface of the negative electrode current collector of the first bending portion and the concave surface of the positive electrode current collector of the second bending portion;
the electrolyte solution contains a fluorosulfonate salt and/or difluorophosphate salt substance; and
a percentage mass content w% of the fluorosulfonate salt and/or difluorophosphate salt substance in the electrolyte solution and the corner lithium plating coefficient β satisfy the following formula II:

$$0.01 \leq w \times \beta \leq 20 \qquad \text{formula II.}$$

The lithium-ion battery of the present application is a lithium-ion battery of a wound structure, and the wound structure refers to an electrode assembly formed by winding positive and negative electrode sheets from inside to outside according to an order of negative electrode-separator-positive electrode-separator-negative electrode-separator-positive electrode through a winding process.

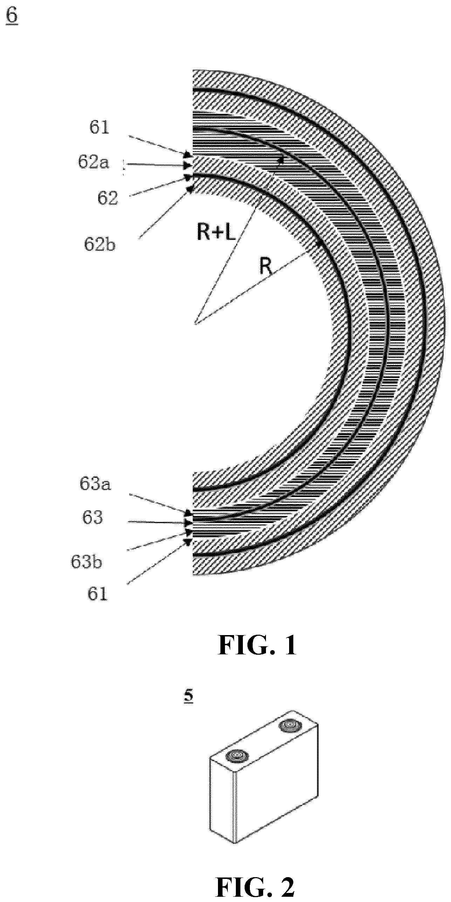

Fig. 1 is a schematic view of an arc bending portion (i.e., a corner of the wound structure) of an electrode assembly of a lithium-ion battery according to an embodiment of the present application. As shown in Fig. 1, the electrode assembly of the present application comprises a negative electrode sheet, a separator and a positive electrode sheet; the negative electrode sheet, the separator and the positive electrode sheet are wound into the wound structure in a winding direction; the wound structure comprises the arc bending portion; and the arc bending portion at least comprises a first bending portion and a second bending portion.

The first bending portion is an innermost arc bending portion (6) formed by winding the negative electrode sheet, and comprises a negative electrode current collector (62) and a negative electrode material layer (62a) at least located on a convex surface of the negative electrode current collector. The second bending portion is located on an outer side of the first bending portion and adjacent to the first bending portion with the separator (61) being therebetween, and comprises a positive electrode current collector (63) and a positive electrode material layer (63a) at least located on a concave surface of the positive electrode current collector.

The negative electrode current collector may also have a negative electrode material layer (62b) located on a concave surface.

The positive electrode current collector may also have a positive electrode material layer (63b) located on a convex surface.

When the negative electrode sheet of the lithium-ion battery of the present application is produced through a coating process, a capacity of the negative electrode sheet is typically designed to be able to completely receive lithium ions from a positive electrode. However, after the positive electrode, a negative electrode and the separator are wound together, for a pair of mutually adjacent negative electrode sheet and positive electrode sheet with the separator being therebetween, there will be the case that an arc length of the negative electrode convex surface is shorter than that of the positive electrode concave surface at the arc bending portion, which makes the negative electrode sheet unable to completely receive the lithium ions from the positive electrode sheet, so the situation of serious lithium plating of the negative electrode is easy to occur at the arc bending portion, and thus the safety performance and electrochemical performance of the battery are degraded.

During design and development of the lithium-ion battery of the present application, the inventor of the present application found that if lithium plating does not occur on the negative electrode convex surface at the innermost circle in the arc bending portion, there will be no convex surface lithium plating on negative electrode convex surfaces at other outer circles. Thus, by comprehensively regulating a minimum curvature radius R of the convex surface of the negative electrode current collector of the first bending portion and a shortest distance L between the convex surface of the negative electrode current collector of the first bending portion and the concave surface of the positive electrode current collector of the second bending portion, the inventor of the present application determines a corner lithium plating coefficient β in close relation with a high energy density and negative electrode lithium plating. The specific influence of β, R and L on the energy density and corner lithium plating of the lithium-ion battery of the present application is analyzed as follows.

As for the corner lithium plating coefficient β, the corner lithium plating coefficient β comprehensively characterizes the comprehensive influence of R and L on the energy density and corner lithium plating of the lithium-ion battery. Since the arc length of the convex surface of the negative electrode current collector and the arc length of the concave surface of the positive electrode current collector are directly proportional to a curvature of surfaces of their substrates, therefore the smaller β indicates that the arc length of the convex surface of the negative electrode current collector is shorter than the arc length of the concave surface of the positive electrode current collector adjacent thereto, and the lithium plating is easier to occur, so that β actually represents an overall lithium plating risk of a high energy density battery.

In the present application, by considering from the point of reducing lithium plating of the arc bending portion and achieving the high energy density of the battery, the range of β is 0.015≤β≤0.95, and a lithium-ion battery with a value of β within this range has the high energy density while avoiding lithium plating of the negative electrode convex surface of the arc bending portion. When the value of β is less than 0.015, i.e., the number of circles of empty wound separators is too small at an initial stage of an actual winding process. Although this can reserve more winding spaces for the positive and negative electrode sheets conductive to increasing the energy density of the battery, it makes the arc length of the convex surface of the negative electrode current collector of the first bending portion shorter than the arc length of the concave surface of the positive electrode current collector of the second bending portion adjacent to the first bending portion, which greatly increases the risk of serious lithium plating of the negative electrode convex surface. On the contrary, when the value of β is greater than 0.95, although lithium plating of the negative electrode convex surface will not occur at this time, the winding space for the positive and negative electrode sheets conductive to increasing the energy density of the battery has a loss due to the overly high value of β, which significantly lowers the energy density of the battery.

Based on the above discussion of β, based on a great amount of experiments, the inventor of the present application found that when a battery assembly satisfying 0.015≤β≤0.95 is matched with a specific electrolyte solution, the risk of lithium plating of the negative electrode convex surface of the high energy density lithium-ion battery of the present application can be significantly lowered. The smaller β indicates that the negative electrode convex surface in the arc bending portion is shorter than the corresponding positive electrode concave surface, and in a charging state, more lithium ions will gather on the negative electrode convex surface, which accelerates generation of lithium dendrites. This requires an additive of a fluorosulfonate salt and/or difluorophosphate salt of a higher percentage to improve the migration ability of lithium ions at a negative electrode interface so as to relieve lithium plating of the negative electrode convex surface. Through a great amount of research, the inventor of the present application found that improving a relationship between a percentage w% of the fluorosulfonate salt and/or difluorophosphate salt as the lithium plating additive in the electrolyte solution and the corner lithium plating coefficient β at the innermost circle has a significant effect on the volumetric energy density of the battery, the corner lithium plating of the negative electrode convex surface and the internal resistance of the battery. When the mass percentage w% of the additive in the electrolyte solution and the corner lithium plating coefficient β at the innermost circle satisfy a relational formula $0.01 \leq w \times \beta \leq 20$, it can be guaranteed that the battery has a high energy density, and the lithium plating situation of the negative electrode convex surface can also be alleviated.

Thus, the problem that the high energy density and the corner lithium plating are hard to balance can be solved by applying the electrolyte solution containing the lithium-plating-inhibiting additive of a fluorosulfonate salt and/or difluorophosphate salt to the lithium-ion battery, more specifically, applying it to a high-energy-density battery with active material layers of electrodes being large in thickness and the curvature radius of the innermost circle being small.

In some embodiments, optionally, $0.02 \leq w \times \beta \leq 5$.

When the range of $w \times \beta$ is within the range of 0.02 to 5, the developed and designed high-energy-density lithium-ion battery has no lithium plating completely, and even no grey spot occurs on the surface of the negative electrode.

In some embodiments, optionally, $0.15 \leq \beta \leq 0.8$.

When β is in the range of 0.15 to 0.8, it can be guaranteed that basically no lithium plating will occur on the premise that the developed and designed battery has the high energy density.

In some embodiments, optionally, the range of R is 2 μm to 5000 μm, optionally 50 μm to 500 μm.

In some embodiments, optionally, the range of L is 20 μm to 900 μm, optionally 50 μm to 500 μm.

The present application may adjust $w \times \beta$ to a proper value by adjusting w% and/or β. Further, for β, as described above, since $\beta = R/(R+L)$, a proper value of β may be obtained by adjusting R and/or L.

For the value of R, R is the minimum curvature radius of the convex surface of the negative electrode current collector of the first bending portion, the value of R may be increased through empty winding of the separator or negative electrode sheet (for a cylindrical battery, the value of R may also be increased by increasing the volume of a middle hole).

Considering from the point of increasing the energy density of the battery and reducing lithium plating of the negative electrode convex surface, the range of R is 2 μm to 5000 μm, preferably 50 μm to 500 μm. For a battery of the same volume, the smaller the value of R is, the higher the volumetric energy density is, and the larger the value of R is, the larger the proportion of an inactive space is, and the smaller the volumetric energy density is. When the value of R is less than 2 μm, on the one hand, current winding processes cannot do this, and on the other hand, lithium plating of the negative electrode convex surface is relatively serious; on the contrary, when the value of R exceeds 5000 μm, the energy density of the battery at this time cannot meet the requirement of delivery.

As for the value of L, L is the shortest distance between the convex surface of the negative electrode current collector of the first bending portion and the concave surface of the positive electrode current collector of the second bending portion, the physical meaning of L is the sum of a thickness of a negative electrode active material layer of the convex surface of the negative electrode current collector of the first bending portion, a thickness of the separator and a thickness of a positive electrode active material layer of the concave surface of the positive electrode current collector of the second bending portion, but actually, since the thickness of the separator is negligible compared with other two thicknesses, for a tightly wound battery structure, the value of L actually represents the sum of the thickness of the negative electrode active material layer of the convex surface of the negative electrode current collector of the first bending portion and the thickness of the positive electrode active material layer of the concave surface of the positive electrode current collector of the second bending portion, so that the value of L has a significant effect on the energy density of the battery.

Considering from the point of increasing the energy density of the battery and reducing lithium plating of the negative electrode convex surface, the range of L is 20 $\mu$m to 900 $\mu$m, preferably 50 $\mu$m to 500 $\mu$m. When L is less than 20 $\mu$m, the volumetric energy density of the battery is low. On the contrary, when L exceeds 900 $\mu$m, the positive electrode active layer and the negative electrode active layer are too thick, a migration path of lithium ions is long, on the one hand, the lithium ions from the positive electrode cannot be intercalated into the negative electrode active layer as soon as possible, increasing the risk of lithium plating, and on the other hand, battery polarization is aggravated, leading to the large internal resistance of the battery.

In some embodiments, optionally, a structural formula of the fluorosulfonate salt is $(FSO_3)_xM^{x+}$, wherein $M^{x+}$ is selected from one or two or more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$; and a structural formula of the difluorophosphate salt is $(F_2PO_2)_yM^{y+}$, wherein $M^{y+}$ is selected from one or two or more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

The inventor of the present application speculates that the reason why such electrolyte solution and its specific component percentage can inhibit lithium plating of the negative electrode convex surface under the high energy density is as follows.

In the electrode assembly, the negative electrode convex surface at the innermost circle is higher in lithium plating risk, and increasing the coating thickness will also further aggravate lithium plating of the negative electrode convex surface. By adding the particular inorganic additive of the fluorosulfonate salt and/or difluorophosphate salt into the electrolyte solution, a microstructure of an SEI film formed on a surface of the negative electrode can be improved, and an inorganic-organic network embedded SEI film is formed. The improved SEI film has a high lithium ion conductivity, making the lithium ions gradually accumulated on the negative electrode convex surface migrated to main body large faces, e.g., portions other than the arc bending portion, of the negative electrode sheet in time under the action of an electric field, rather than being "gathered" on the negative electrode convex surface, which makes intercalation of lithium on various portions of the negative electrode more evenly, thereby effectively inhibiting the lithium dendrites on the negative electrode convex surface.

The inventor of the present application infers that the reason why the inorganic-organic network embedded SEI film of the present application is more conductive to inhibiting lithium plating of the negative electrode convex surface under the high energy density of the battery is as follows.

The fluorosulfonate salt and the difluorophosphate salt will be reduced on the surface of the negative electrode when being chemically formed, which can form a low-impedance SEI film. Such low-impedance SEI film is involves two aspects: in one aspect, a reduced inorganic product of the fluorosulfonate salt or the difluorophosphate salt has an excellent lithium ion conductivity, which can improve the lithium ion transmission capacity of the SEI; and in another aspect, the SEI rich in inorganic substances is thinner and more stable, which can shorten a path of lithium ions passing through the SEI. Due to the low-impedance SEI film, unacceptable lithium in the negative electrode will quickly migrate to the place not filled with lithium under the action of electric field strength, which makes even intercalation of lithium on various portions of the negative electrode, thereby inhibiting the generation of lithium plating of the negative electrode.

Thus, the problem that high energy density and corner lithium plating are difficult to balance can be solved by applying the electrolyte solution containing the lithium-plating-inhibiting additive of a fluorosulfonate salt and/or difluorophosphate salt to the lithium-ion battery, more specifically, applying it to a high-energy-density battery with active material layers of electrodes being large in thickness and the curvature radius of the innermost circle being small.

In some embodiments, optionally, the percentage mass content w% of the fluorosulfonate salt and/or difluorophosphate salt substance in the electrolyte solution has a range of 0.02% to 25%, preferably a range of 0.02% to 20%, more optionally a range of 0.05% to 10%, and further optionally 0.1% to 5%.

In actual research, the inventor of the present application found that excessive addition of fluorosulfonate salt and/or difluorophosphate salt to the electrolyte solution will increase the electrolytic viscosity, deteriorate the conductivity of the electrolyte solution and increase the internal resistance of the battery; and on the contrary, insufficient addition of fluorosulfonate salt and/or difluorophosphate salt cannot inhibit lithium plating of the negative electrode convex surface.

In some embodiments, optionally, the electrolyte solution further contains fluoroethylene carbonate (FEC) and/or 1,3-propanesultone (PS), and a percentage mass content of the fluoroethylene carbonate and/or the 1,3-propanesultone in the electrolyte solution is 0.01% to 15%, optionally 0.05% to 5% and further optionally 0.1% to 2%.

The inventor of the present application also found that when the FEC and/or PS are/is further added to the electrolyte solution containing the fluorosulfonate salt and the difluorophosphate salt in the present application to form a film on the negative electrode, the stability of a negative electrode interface can be further improved, so as to further improve the normal temperature cycling performance and high temperature cycling performance. When the percentage of the FEC and/or the PS in the electrolyte solution is 0.01% to 15%, the cycling performance of the battery is improved more significantly. However, when the added percentage of fluoroethylene carbonate and/or 1,3-propanesultone is high, the fluoroethylene carbonate and/or the 1,3-propanesultone are prone to forming a film through oxidation on the positive electrode under a high temperature, leading to an increase of polarization of the positive electrode, which is not conductive to using of the high temperature cycling performance of the lithium-ion battery.

In the lithium-ion battery of the present application, the electrolyte solution comprises lithium salts, and the type of the lithium salts is not specially limited and can be selected according to actual requirements. Specifically, the lithium salts may be selected from a combination of any one or two or more of $LiN(C_mF_{2m+1}SO_2)(C_nF_{2n+1}SO_2)$, $LiPF_6$, $LiBF_4$, LiBOB, $LiAsF_6$, $Li(CF_3SO_2)_2N$, $LiCF_3SO_3$ and $LiClO_4$, wherein m and n are natural numbers, such as 1 to 5.

In the lithium-ion battery of the present application, the electrolyte solution contains an organic solvent. The type of the organic solvent is not specially limited and can be selected according to actual requirements. Specifically, the organic solvent can be selected from one or two or more of various chain carbonates, cyclic carbonates and carboxylates. The types of the chain carbonates, the cyclic carbonates and the carboxylates are not specifically limited and can be selected according to actual requirements. Preferably, the organic solvent can also be selected from one or two or more of diethyl carbonate, dipropyl carbonate, ethyl methyl carbonate, methyl propyl carbonate, ethyl propyl carbonate, ethylene carbonate, propylene carbonate, butene carbonate, γ-butyrolactone, methyl formate, ethyl acetate, propyl acetate, methyl propionate, ethyl propionate, methyl propionate and tetrahydrofuran.

The content of the organic solvent in the electrolyte solution may be properly adjusted according to the percentage mass content w% of the fluorosulfonate salt and/or the difluorophosphate salt substance.

In the lithium-ion battery of the present application, the electrolyte solution may further contain other additives. The other additives can be properly selected according to the specific purposes. For example, they can be selected from at least one of a sulfate compound, a sulfite compound, a disulfonic acid compound, a nitrile compound, an aromatic compound, an isocyanate compound, a phosphazene compound, a cyclic anhydride compound, a phosphite compound, a phosphate compound, a borate compound and a carboxylate compound. Percentages of these other additives in the electrolyte solution are 0.01% to 10%, preferably 0.1% to 5%, and further optionally 0.1% to 2%.

In some embodiments, optionally, a porosity of the negative electrode material layer is 20% to 50%, further optionally 30% to 50%.

In the lithium-ion battery of the present application, the porosity of the negative electrode active layer is 20% to 50%. On the premise of keeping the lithium-ion battery having the relatively high energy density, the greater the porosity of the negative electrode material layer, the quicker the lithium migrating from the positive electrode to the negative electrode migrate to the interior of the negative electrode active layer during charging, which can alleviate lithium plating of the surface of the negative electrode, but the volumetric energy density of the electrode assembly will be reduced. By limiting the porosity of the negative electrode active layer to 20% to 50%, lithium plating of the negative electrode convex surface can be alleviated, and the battery has the high volumetric energy density. The porosity of the negative electrode active layer can be adjusted by using negative electrode materials with different particle sizes and performing cold pressing on the negative electrode sheet with different pressures.

In the lithium-ion battery of the present application, the negative electrode sheet comprises a negative electrode current collector, and a negative electrode active layer arranged on the negative electrode current collector and comprising a negative electrode active material, and the negative electrode material layer may be arranged on one of front and back surfaces of the negative electrode current collector, or on both of the front and back surfaces of the negative electrode current collector. In the lithium-ion battery of the present application, it is preferred that the negative electrode sheet comprises the negative electrode current collector and negative electrode active layers respectively located on front and back surfaces of the negative electrode current collector. After winding, the negative electrode material layers on the front and back surfaces of the negative electrode current collector become the negative electrode material layers located on the concave surface (i.e., the inner side) and the convex surface (i.e., the outer side) of the negative electrode current collector.

For the negative electrode active materials contained in the negative electrode active layer, their types are not specifically limited. Conventional negative electrode active materials in the field of lithium batteries can be used, for example, they can be selected from one or more of graphite, soft carbon, hard carbon, mesocarbon microbeads, carbon fibers, carbon nanotubes, elemental silicon, silicon oxide compounds, silicon carbon composites and lithium titanate.

In the lithium-ion battery of the present application, the negative electrode active layer may further comprise a conductive agent and a binder. The types and contents of the conductive agent and the binder are not specifically limited, the types and contents of conductive agents and binders commonly used in negative electrode material layers of a lithium battery may be adopted, and they may be selected according to actual requirements.

In addition, in the lithium battery of the present application, the type of the negative electrode current collector is also not specifically limited, a negative electrode current collector commonly used in a lithium battery typically may be adopted, and it may also be selected according to actual requirements.

In the lithium-ion battery of the present application, the positive electrode sheet comprises a positive electrode current collector, and a positive electrode material layer arranged on the positive electrode current collector and comprising a positive electrode active material, and the positive electrode material layer may be arranged on one of front and back surfaces of the positive electrode current collector, or on both of the front and back surfaces of the positive electrode current collector. In the lithium-ion battery of the present application, it is preferred that the positive electrode sheet comprises the positive electrode current collector and positive electrode material layers respectively located on front and back surfaces of the positive electrode current collector. After winding, the positive electrode material layers on the front and back surfaces of the positive electrode current collector become the positive electrode material layers located on the concave surface (i.e., the inner side) and the convex surface (i.e., the outer side) of the positive electrode current collector.

In the lithium-ion battery of the present application, for the positive electrode active material contained in the positive electrode material layer, the positive electrode active material is selected from materials that can achieve deintercalation and intercalation of lithium ions. Specifically, the positive electrode active material may be selected from one or two or more of lithium iron phosphate, lithium manganese iron phosphate, lithium-cobalt oxide, lithium-nickel oxide, lithium-manganese oxide, lithium-nickel-manganese oxide, lithium-nickel-cobalt-manganese oxide, lithium-nickel-cobalt-aluminum oxide, and compounds obtained by adding other transition metals or non-transition metals to the above compounds, but the present application is not limited to these materials, and conventional positive electrode active materials in the field of lithium batteries can also be adopted.

In the lithium-ion battery of the present application, the positive electrode material layer may further comprise a conductive agent and a binder. The types and contents of the conductive agent and the binder are not specifically limited, the types and contents of conductive agents and binders commonly used in positive electrode material layers of a lithium battery may be adopted, and they may be selected according to actual requirements.

In addition, in the lithium battery of the present application, the type of the positive electrode current collector is also not specifically limited, a positive electrode current collector commonly used in a lithium battery typically may be adopted, and it may also be selected according to actual requirements.

In the lithium-ion battery of the present application, the separator is arranged between the positive electrode sheet and the negative electrode sheet and has a function of separation. The type of the separator is not specifically limited. The separator can be any type of separator material used in existing batteries, for example, films made of polyethylene, polypropylene and polyvinylidene fluoride and their multilayer composite films, but is not limited to these.

The present application has no special restrictions on the shape of the lithium-ion battery, which may have a shape of a cylinder, a square or any other shape. For example, Fig. 2 is a lithium-ion battery 5 of a square structure as an instance.

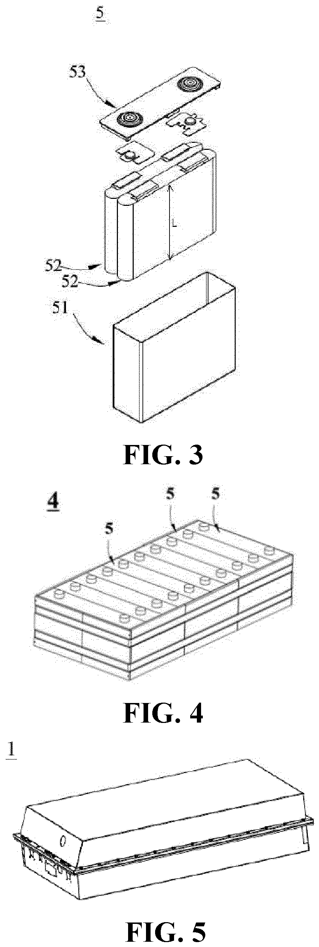

In some embodiments, referring to Fig. 3, the outer package can include a case 51 and a cover plate 53. Here, the case 51 can include a bottom plate and a side plate connected to the bottom plate, with the bottom plate and the side plate enclosing to form an accommodating cavity. The case 51 has an opening communicating with the accommodating cavity, and the cover plate 53 can cover the opening to seal the accommodating cavity. The positive electrode sheet, the negative electrode sheet and the separator may be made into an electrode assembly 52 through a winding process or a lamination process. The electrode assembly 52 is encapsulated within the accommodating cavity. The electrolyte solution impregnates the electrode assembly 52. The lithium-ion battery 5 may contain one or more electrode assemblies 52, which may be selected by those skilled in the art according to specific actual requirements.

In addition, the lithium-ion battery, the battery module, the battery pack and the device of the present application are properly described with reference to the accompanying drawings below.

[Battery module]

In some embodiments, the lithium-ion battery in the first aspect of the present application may be assembled into the battery module, the battery module may contain one or more lithium-ion batteries, and the specific number may be selected by those skilled in the art according to the application and content of the battery module.

Fig. 4 is an example of battery module 4. Referring to Fig. 4, in the battery module 4, a plurality of lithium-ion batteries 5 may be sequentially arranged in a length direction of the battery module 4. Of course, they may also be distributed in any other way. The plurality of lithium-ion batteries 5 may further be fixed by fasteners.

Optionally, the battery module 4 may further comprise a shell with an accommodating space, and the plurality of lithium-ion batteries 5 are accommodated in the accommodating space.

[Battery pack]

In some embodiments, the battery modules of the present application can also be assembled into a battery pack, and the number of battery modules contained in the battery pack can be selected by those skilled in the art according to the application and capacity of the battery pack.

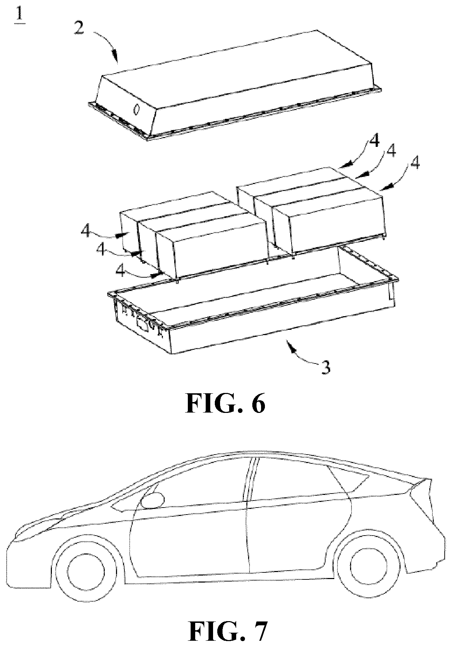

Figs. 5 and 6 are an example of battery pack 1. Referring to Figs. 4 and 5, the battery pack 1 may comprise a battery box and a plurality of battery modules 4 arranged in the battery box. The battery box includes an upper box 2 and a lower box 3, wherein the upper box 2 can cover the lower box 3, and forms an enclosed space for accommodating the battery module 4. The plurality of battery modules 4 can be arranged in the battery box in any manner.

[Powered device]

In addition, the present application further provides a powered device, and the powered device comprises one or more of the lithium-ion battery, the battery module, or the battery pack provided by the present application. The lithium-ion battery, battery module, or battery pack can be used as a power source for the device, and can also be used as an energy storage unit for the device. The devices can be, but are not limited to, mobile devices (such as mobile phones, laptops etc.), electric vehicles (such as all-electric vehicles, hybrid electric vehicles, plug-in hybrid electric vehicles, electric bicycles, electric scooters, electric golf carts, electric trucks, etc.), electric trains, ships and satellites, energy storage systems, etc.

The lithium-ion battery, the battery module or the battery pack may be selected according to using requirements of the powered device.

Fig. 7 is an example of device. The device is a all-electric vehicle, a hybrid electric vehicle, or a plug-in hybrid electric vehicle, etc. For the device to meet the requirements of high power and high energy density for lithium-ion batteries, battery packs or battery modules can be used.

A device as another instance may be a mobile phone, a tablet computer, a laptop, or the like. The device is generally required to be light and thin, and can use a lithium-ion battery as a power source.

Examples

The present application is further described below in combination with examples. It should be understood that these examples are only used to illustrate the present application and not to limit the scope of the present application.

Lithium-ion batteries in the examples and comparative examples are both prepared according to a method below:

(1) Preparation of positive electrode sheet A positive electrode active material $LiNi_{0.8}Mn_{0.1}Co_{0.1}O_2$, a conductive acetylene black and a binder polyvinylidene fluoride (PVDF) were dissolved in a solvent N-methyl pyrrolidone (NMP) according to a weight ratio of 94:3:3 and were fully stirred and mixed evenly to obtain a positive electrode slurry. Then, a positive electrode current collector was evenly coated with the positive electrode slurry, and then a positive electrode sheet was obtained after oven drying, cold pressing and slitting. Positive electrode sheets of different thicknesses might be obtained by adjusting coating weights of the positive electrode slurry.

(2) Preparation of negative electrode sheet An active material artificial graphite, a conductive acetylene black, a binder styrene butadiene rubber (SBR) and a thickener sodium carboxymethyl cellulose (CMC) were dissolved in a solvent deionized water according to a weight ratio of 95:2:2:1 and evenly mixed with the solvent deionized water to prepare a negative electrode slurry. Then, negative electrode current collector copper foil was evenly coated with the negative electrode slurry, a negative electrode diaphragm was obtained after oven drying, and then a negative electrode sheet was obtained after cold pressing and slitting. Negative electrode sheets of different thicknesses might be obtained by adjusting coating weights of the negative electrode slurry.

(3) Preparation of separator The separator used in the present application was a polyethylene film.

(4) Preparation of electrode assembly

Example 1-1:

A thickness of a negative electrode copper foil substrate was 2 $\mu$m, a thickness of a negative electrode material layer coating the substrate was 66 $\mu$m, at the innermost circle, only a convex surface was coated with a negative electrode material, and in other regions, both surfaces were coated with negative electrode materials; a positive electrode aluminum foil substrate was 13 $\mu$m in thickness, having both surfaces coated with positive electrode material layers with a thickness of 62 $\mu$m; and a separator was 7 $\mu$m in thickness. Finally, a negative electrode, a separator, a positive electrode and a separator were wound together in sequence from inside to outside to obtain an electrode assembly with R=2 $\mu$m and L=135 $\mu$m.

Example 1-2:

A thickness of a negative electrode copper foil substrate was 5 $\mu$m, a thickness of a negative electrode material layer coating the substrate was 66 $\mu$m, at the innermost circle, only a convex surface was coated with a negative electrode material, and in other regions, both surfaces were coated with negative electrode materials; a positive electrode aluminum foil substrate was 13 $\mu$m in thickness, having both surfaces coated with positive electrode material layers with a thickness

of 62 μm; and a separator was 7 μm in thickness. Finally, a negative electrode, a separator, a positive electrode and a separator are wound together in sequence from inside to outside to obtain an electrode assembly with R=5 μm and L=135 μm.

Example 1-3:

A thickness of a negative electrode copper foil substrate was 4 μm, a thickness of a negative electrode material layer coating the substrate was 66 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 62 μm; and a separator was 7 μm in thickness. The separator was wound by one circle first, then a negative electrode was inserted, and then a positive electrode was inserted and wound together to obtain an electrode assembly with R=25 μm and L=135 μm.

Example 1-4:

A thickness of a negative electrode copper foil substrate was 8 μm, a thickness of a negative electrode material layer coating the substrate was 66 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 62 μm; and a separator was 7 μm in thickness. The separator was wound by three circles first, then a negative electrode was inserted, and then a positive electrode was inserted and wound together to obtain an electrode assembly with R=50 μm and L=135 μm.

Example 1-5:

A negative electrode copper foil substrate was 8 μm in thickness, having both surfaces coated with negative electrode material layers with a thickness of 66 μm; a positive electrode aluminum foil substrate was 13 μm in thickness, having both surfaces coated with positive electrode material layers with a thickness of 62 μm; and a separator was 7 μm in thickness. The separator was wound by one circle first, then a negative electrode was inserted, and then a positive electrode was inserted and wound together to obtain an electrode assembly with R=95 μm and L=135 μm.

Example 1-6:

A thickness of a negative electrode copper foil substrate was 8 μm, a thickness of a negative electrode material layer coating the substrate was 66 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 62 μm; and a separator was 7 μm in thickness. The separator was wound by thirteen circles first, then a negative electrode was inserted, and then a positive electrode was inserted and wound together to obtain an electrode assembly with R=190 μm and L=135 μm.

Example 1-7:

A negative electrode copper foil substrate was 7 μm in thickness, having both surfaces coated with negative electrode material layers with a thickness of 66 μm; a positive electrode aluminum foil substrate was 13 μm in thickness, having both surfaces coated with positive electrode material layers with a thickness of 62 μm; and a separator was 7 μm in thickness. The separator was wound by eight circles first, then a negative electrode was inserted and wound by three circles, and then a positive electrode was inserted and wound together to obtain an electrode assembly with R=500 μm and L=135 μm.

Example 1-8:

A negative electrode copper foil substrate was 7 μm in thickness, having both surfaces coated with negative electrode material layers with a thickness of 66 μm; a positive electrode aluminum foil substrate was 13 μm in thickness, having both surfaces coated with positive electrode material layers with a thickness of 62 μm; and a separator was 7 μm in thickness. The separator was wound by six circles first, then a negative electrode was inserted and wound by four circles, and then a positive electrode was inserted and wound together to obtain an electrode assembly with R=780

μm and L=135 μm.

Example 1-9:

A negative electrode copper foil substrate was 7 μm in thickness, having both surfaces coated with negative electrode material layers with a thickness of 66 μm; a positive electrode aluminum foil substrate was 13 μm in thickness, having both surfaces coated with positive electrode material layers with a thickness of 62 μm; and a separator was 7 μm in thickness. The separator was wound by three circles first, then a negative electrode was inserted and wound by nine circles, and then a positive electrode was inserted and wound together to obtain an electrode assembly with R=1500 μm and L=135 μm.

Example 1-10:

A negative electrode copper foil substrate was 9 μm in thickness, having both surfaces coated with negative electrode material layers with a thickness of 100 μm; a positive electrode aluminum foil substrate was 13 μm in thickness, having both surfaces coated with positive electrode material layers with a thickness of 93 μm; and a separator was 7 μm in thickness. The separator was wound by fifteen circles first, then a negative electrode was inserted and wound by twelve circles, and then a positive electrode was inserted and wound together to obtain an electrode assembly with R=3000 μm and L=200 μm.

Example 1-11:

A negative electrode copper foil substrate was 9 μm in thickness, having both surfaces coated with negative electrode material layers with a thickness of 151 μm; a positive electrode aluminum foil substrate was 13 μm in thickness, having both surfaces coated with positive electrode material layers with a thickness of 142 μm; and a separator was 7 μm in thickness. The separator was wound by twenty circles first, then a negative electrode was inserted and wound by fourteen circles, and then a positive electrode was inserted and wound together to obtain an electrode assembly with R=5000 μm and L=300 μm.

Example 2-1:

A negative electrode copper foil substrate was 7 μm in thickness, having both surfaces coated with negative electrode material layers with a thickness of 2.6 μm; a positive electrode aluminum foil substrate was 13 μm in thickness, having both surfaces coated with positive electrode material layers with a thickness of 2.4 μm; and a separator was 5 μm in thickness. The separator was wound by eight circles first, then a negative electrode was inserted, and then a positive electrode was inserted and wound together to obtain an electrode assembly with R=95 μm and L=10 μm.

Example 2-2:

A negative electrode copper foil substrate was 10 μm in thickness, having both surfaces coated with negative electrode material layers with a thickness of 6.7 μm; a positive electrode aluminum foil substrate was 13 μm in thickness, having both surfaces coated with positive electrode material layers with a thickness of 6.3 μm; and a separator was 7 μm in thickness. The separator was wound by five circles first, then a negative electrode was inserted, and then a positive electrode was inserted and wound together to obtain an electrode assembly with R=95 μm and L=20 μm.

Example 2-3:

A negative electrode copper foil substrate was 10 μm in thickness, having both surfaces coated with negative electrode material layers with a thickness of 22 μm; a positive electrode aluminum foil substrate was 13 μm in thickness, having both surfaces coated with positive electrode material layers with a thickness of 21 μm; and a separator was 7 μm in thickness. The separator was wound by four circles first, then a negative electrode was inserted, and then a positive electrode was inserted and wound together to obtain an electrode assembly with R=95 μm and L=50 μm.

Example 2-4:

A negative electrode copper foil substrate was 12 μm in thickness, having both surfaces coated with negative electrode material layers with a thickness of 48 μm; a positive electrode aluminum foil substrate was 13 μm in thickness, having both surfaces coated with positive electrode material layers with a thickness of 45 μm; and a separator was 7

μm in thickness. The separator was wound by two circles first, then a negative electrode was inserted, and then a positive electrode was inserted and wound together to obtain an electrode assembly with R=95 μm and L=100 μm.

Example 2-5:

An electrode assembly was prepared in the same way as Example 1-5.

Example 2-6:

A thickness of a negative electrode copper foil substrate was 5 μm, a thickness of a negative electrode material layer coating the substrate was 94.4 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 88.6 μm; and a separator was 7 μm in thickness. The separator was wound by six circles first, then a negative electrode was inserted, and then a positive electrode was inserted and wound together to obtain an electrode assembly with R=95 μm and L=190 μm.

Example 2-7:

A thickness of a negative electrode copper foil substrate was 5 μm, a thickness of a negative electrode material layer coating the substrate was 120 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 113 μm; and a separator was 7 μm in thickness. The separator was wound by six circles first, then a negative electrode was inserted, and then a positive electrode was inserted and wound together to obtain an electrode assembly with R=95 μm and L=240 μm.

Example 2-8:

A thickness of a negative electrode copper foil substrate was 5 μm, a thickness of a negative electrode material layer coating the substrate was 228 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 216 μm; and a separator was 7 μm in thickness. The separator was wound by six circles first, then a negative electrode was inserted, and then a positive electrode was inserted and wound together to obtain an electrode assembly with R=95 μm and L=450 μm.

Example 2-9:

A thickness of a negative electrode copper foil substrate was 5 μm, a thickness of a negative electrode material layer coating the substrate was 254 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 239 μm; and a separator was 7 μm in thickness. The separator was wound by six circles first, then a negative electrode was inserted, and then a positive electrode was inserted and wound together to obtain an electrode assembly with R=95 μm and L=500 μm.

Example 2-10:

A thickness of a negative electrode copper foil substrate was 5 μm, a thickness of a negative electrode material layer coating the substrate was 460 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 433 μm; and a separator was 7 μm in thickness. The separator was wound by six circles first, then a negative electrode was inserted, and then a positive electrode was inserted and wound together to obtain an electrode assembly with R=95 μm and L=900 μm.

Example 2-11:

A thickness of a negative electrode copper foil substrate was 5 μm, a thickness of a negative electrode material layer coating the substrate was 564 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness of 529 μm; and a separator was 7 μm in thickness. The separator was wound by six circles first, then a negative electrode was inserted, and then a positive electrode was inserted and wound together to obtain an electrode assembly with R=95 μm and L=1100 μm.

Example 3-1 to Example 3-10:

An electrode assembly was prepared in the same way as Example 1-5.

Example 3-11:

A negative electrode copper foil substrate was 5 μm in thickness, having both surfaces coated with negative electrode material layers with a thickness of 27.3 μm; a positive electrode aluminum foil substrate was 13 μm in thickness, having both surfaces coated with positive electrode material layers with a thickness of 25.7 μm; and a separator was 7 μm in thickness. The separator was wound by four circles first, then a negative electrode was inserted, and then a positive electrode was inserted and wound together to obtain an electrode assembly with R=95 μm and L=60 μm.

Example 3-12:

A negative electrode copper foil substrate was 8 μm in thickness, having both surfaces coated with negative electrode material layers with a thickness of 38 μm; a positive electrode aluminum foil substrate was 13 μm in thickness, having both surfaces coated with positive electrode material layers with a thickness of 35 μm; and a separator was 7 μm in thickness. The separator was wound by four circles first, then a negative electrode was inserted and wound by four circles, and then a positive electrode was inserted and wound together to obtain an electrode assembly with R=500 μm and L=80 μm.

Example 3-13:

A negative electrode copper foil substrate was 7 μm in thickness, having both surfaces coated with negative electrode material layers with a thickness of 100 μm; a positive electrode aluminum foil substrate was 13 μm in thickness, having both surfaces coated with positive electrode material layers with a thickness of 93 μm; and a separator was 7 μm in thickness. The separator was wound by nine circles first, then a negative electrode was inserted and wound by seventeen circles, and then a positive electrode was inserted and wound together to obtain an electrode assembly with R=4000 μm and L=200 μm.

Example 3-14:

An electrode assembly was prepared in the same way as Example 3-13.

Example 4-1 to Example 4-15:

An electrode assembly was prepared in the same way as Example 1-5.

Example 5-1 to Example 5-7:

An electrode assembly was prepared in the same way as Example 1-5.

Comparative Example 1:

A thickness of a negative electrode copper foil substrate was 5 μm, a thickness of a negative electrode material layer coating the substrate was 73 μm, at the innermost circle, only a convex surface was coated with a negative electrode material, and in other regions, both surfaces were coated with negative electrode materials; a positive electrode aluminum foil substrate was 13 μm in thickness, having both surfaces coated with positive electrode material layers with a thickness

of 55 $\mu$m; and a separator was 7 $\mu$m in thickness. Finally, a negative electrode, a separator and a positive electrode were wound together in sequence from inside to outside to obtain an electrode assembly of Comparative Example 1.

Comparative Example 2:

A negative electrode copper foil substrate was 8 $\mu$m in thickness, having both surfaces coated with negative electrode material layers with a thickness of 73 $\mu$m; a positive electrode aluminum foil substrate was 13 $\mu$m in thickness, having both surfaces coated with positive electrode material layers with a thickness of 55 $\mu$m; and a separator was 7 $\mu$m in thickness. The separator was wound by one circle first, and then a negative electrode and a positive electrode were inserted and wound together to obtain an electrode assembly of Comparative Example 2.

Comparative Example 3:

A negative electrode copper foil substrate was 8 $\mu$m in thickness, having both surfaces coated with negative electrode material layers with a thickness of 73 $\mu$m; a positive electrode aluminum foil substrate was 13 $\mu$m in thickness, having both surfaces coated with positive electrode material layers with a thickness of 55 $\mu$m; and a separator was 7 $\mu$m in thickness. The separator was wound by one circle first, then a negative electrode was inserted and wound by six circles, and then a positive electrode was inserted and wound together to obtain an electrode assembly of Comparative Example 3.

Comparative Example 4:

A negative electrode copper foil substrate was 8 $\mu$m in thickness, having both surfaces coated with negative electrode material layers with a thickness of 30 $\mu$m; a positive electrode aluminum foil substrate was 13 $\mu$m in thickness, having both surfaces coated with positive electrode material layers with a thickness of 23 $\mu$m; and a separator was 7 $\mu$m in thickness. The separator was wound by four circles first, and then a negative electrode and a positive electrode were inserted and wound together to obtain an electrode assembly of Comparative Example 4.

Comparative Example 5:

A thickness of a negative electrode copper foil substrate was 8 $\mu$m, a thickness of a negative electrode material layer coating the substrate was 218.5 $\mu$m, at the innermost circle, only a convex surface was coated with a negative electrode material, and in other regions, both surfaces were coated with negative electrode materials; a positive electrode aluminum foil substrate was 13 $\mu$m in thickness, having both surfaces coated with positive electrode material layers with a thickness of 164.5 $\mu$m; and a separator was 7.2 $\mu$m in thickness. The separator was wound by six circles first, and then a negative electrode and a positive electrode were inserted and wound together to obtain an electrode assembly of Comparative Example 5.

(5) Preparation of electrolyte solution

In an argon atmosphere glove box ($H_2O$<0.1ppm, $O_2$<0.1ppm), an organic solvent EC/EMC was evenly mixed according to a volume ratio of 3/7, a 12.5% $LiPF_6$ lithium salt was added and dissolved in the organic solvent, and additives shown in tables were added and evenly stirred to obtain a corresponding electrolyte solution.

(6) Preparation of lithium-ion battery

An electrode assembly was placed in a battery case followed by drying, an electrolyte solution was then injected, and a lithium-ion battery was prepared through processes such as chemical formation, and standing.
A testing process of relevant parameters of an electrode assembly is described below.

[1] Determining method of minimum curvature radius R ($\mu$m) of convex surface of negative electrode current collector of first bending portion

Battery X-ray computed tomography was performed referring to ISO 15708:22 Nondestructive testing-Radiation methods-Computed tomography, and an instrument apparatus was Waygate Technologies nanomelx neo 180. Firstly, the electrode assembly was fixed on a high-precision numerical control programmable sample scanning turntable, then the apparatus was turned on, and a two-dimensional projection was acquired with phoenix datos x acquisition software. After acquisition of the two-dimensional projection was completed, geometric correction was carried out, and then three-dimensional volume reconstruction was carried out, so as to obtain a three-dimensional structure of a battery cell assembly without damage. Then, a curvature radius of a surface of a negative electrode convex surface substrate at the innermost circle was measured by CAD software, with a minimum value of R.

[2] Shortest distance L ($\mu$m) between convex surface of negative electrode current collector of first bending portion and concave surface of positive electrode current collector of second bending portion

The electrode assembly was disassembled, and then a micrometer was used to measure a thickness H2 of a negative electrode sheet and a thickness H3 of a negative electrode current collector, a thickness H4 of a positive electrode sheet and a thickness H5 of a positive electrode current collector, and a thickness H6 of a separator. A result was obtained according to a formula L ($\mu$m)=(H2-H3+H4-H5)/2+H6.

[3] Porosity of negative electrode active layer

A negative electrode active layer was punched into small discs with a diameter of 10 cm, a thickness was measured by using a micrometer, an apparent volume V1 was calculated, and then a true volume V2 was tested by adopting a true density tester (AccuPyc 1340) referring to GB/T 24586-2009. A sample of certain mass was weighed and placed in the true density tester, a test system was sealed, nitrogen was injected according to a procedure, the true volume V2 was automatically calculated according to the Bohr's law by detecting gas pressure in a sample chamber and an expansion chamber, and the porosity = (V1-V2)/V1*100%.
A testing method of a lithium-ion battery is described next.

[1] Lithium plating of negative electrode convex surface in first bending portion

A chemically formed battery was charged to 4.2 V at 1.5 C constant current at 25°C, then charged until the current was less than 0.05 C at 4.2 V constant voltage, and then discharged to 2.8 V at 1 C, and after 20 cycles, the battery was charged to 4.2 V at 1.5 C constant current, and then charged until the current was less than 0.05 C at 4.2V constant voltage to obtain a fully charged battery.
The battery subjected to 20 cycles was disassembled, and lithium plating of a negative electrode convex surface at the innermost side (innermost circle) was observed and recorded in the column of "lithium plating of negative electrode convex surface" in tables below.
An evaluation standard after observation is as follows.
No lithium plating: a surface of a fully charged negative electrode at a corner region is golden yellow, and after wiping with dust-free paper, no grey metal lithium powder is left on the paper.
Slight lithium plating: a surface of a fully charged negative electrode at a corner region is dark yellow, and after wiping with dust-free paper, grey metal lithium powder is left on the paper.
Grey spot: a surface of a fully charged negative electrode at a corner region is locally grey, and no golden yellow is exposed.
Serious lithium plating: a surface of a fully charged negative electrode at a corner region is completely grey, and no golden yellow is exposed.
In the present application, a preferred order of lithium plating of the negative electrode convex surface is no lithium plating>grey spot>slight lithium plating>serious lithium plating.

[2] Volumetric energy density

At 25°C, a lithium-ion battery was charged to 4.2 V at 1 C constant current, then charged until the current was less than 0.05 C at 4.2 V constant voltage, and then discharged to 2.8 V at 0.33 C to obtain discharge energy Q. A length, a width and a height of a battery cell shell were measured by using a vernier, a volume V was obtained through calculation, and a volumetric energy density = Q/V. A unit of the volumetric energy density was WhL$^{-1}$.

[3] Internal resistance of battery

At 25°C, a lithium-ion battery was charged to 4.2 V at 1 C constant current, then charged until the current was less than 0.05 C at 4.2 V constant voltage, and then discharged for 30 mins at 1 C, that is, the electric quantity of a battery cell was adjusted to 50% SOC. Afterwards, positive and negative probes of a TH2523A alternating current internal resistance tester made contact with positive and negative electrodes of the battery respectively, and an internal resistance value of the battery was read through the internal resistance tester.

[4] Normal temperature cycling performance test of battery

At 25°C, a lithium-ion battery was charged to 4.2 V at 1 C constant current, then charged until the current was less than 0.05 C at 4.2 V constant voltage, and then discharged to 2.8 V at 1 C constant current, and this was a charge and discharge process. Charge and discharge were repeated in this way to calculate a capacity retention rate of the lithium-ion battery after 1000 cycles.

The capacity retention rate (%) of the lithium-ion battery after 1000 cycles at 25°C = (discharge capacity of the 1000th cycle/discharge capacity of the first cycle)×100%.

[5] High temperature cycling performance test of battery

At 45°C, a lithium-ion battery was charged to 4.2 V at 1 C constant current, then charged until the current was less than 0.05 C at 4.2 V constant voltage, and then discharged to 2.8 V at 1 C constant current, and this was a charge and discharge process. Charge and discharge were repeated in this way to calculate a capacity retention rate of the lithium-ion battery after 800 cycles.

The capacity retention rate (%) of the lithium-ion battery after 1000 cycles at 45°C = (discharge capacity of the 800th cycle/discharge capacity of the first cycle)×100%.

Table 1:

| No. | Bending portion | | Electrolyte solution | | | | | | |
| | R (μm) | L (μm) | Fluorosulfonate salt and/or difluorophosphate salt | Mass percentage w% of fluorosulfonate salt and/or difluorophosphate salt in electrolyte solution | Types of other additives | β | w×β | Lithium plating of negative electrode convex surface in first bending portion | Volumetric energy density /WhL$^{-1}$ |
|---|---|---|---|---|---|---|---|---|---|
| Example 1-1 | 2 | 135 | FSO$_3$Li | 1 | - | 0.015 | 0.015 | Slight lithium plating | 575 |
| Example 1-2 | 5 | 135 | FSO$_3$Li | 1 | - | 0.036 | 0.036 | Slight lithium plating | 574 |
| Example 1-3 | 25 | 135 | FSO$_3$Li | 1 | - | 0.16 | 0.16 | Grey spot | 572 |
| Example 1-4 | 50 | 135 | FSO$_3$Li | 1 | - | 0.27 | 0.27 | No lithium plating | 571 |
| Example 1-5 | 95 | 135 | FSO$_3$Li | 1 | - | 0.41 | 0.41 | No lithium plating | 570 |
| Example 1-6 | 190 | 135 | FSO$_3$Li | 1 | - | 0.58 | 0.58 | No lithium plating | 568 |
| Example 1-7 | 500 | 135 | FSO$_3$Li | 1 | - | 0.79 | 0.79 | No lithium plating | 563 |
| Example 1-8 | 780 | 135 | FSO$_3$Li | 1 | - | 0.85 | 0.85 | No lithium plating | 553 |
| Example 1-9 | 150 0 | 135 | FSO$_3$Li | 1 | - | 0.92 | 0.92 | No lithium plating | 520 |
| Example 1-10 | 300 0 | 200 | FSO$_3$Li | 1 | - | 0.94 | 0.94 | No lithium plating | 521 |
| Example 1-11 | 500 0 | 300 | FSO$_3$Li | 1 | - | 0.94 | 0.94 | No lithium plating | 518 |
| Comparative Example 1 | 5 | 135 | / | 0 | - | 0.0366 | 0.00 | Serious lithium plating | 571 |
| Comparative Example 2 | 95 | 60 | / | 0 | - | 0.61 | 0.00 | Slight lithium plating | 515 |
| Comparative Example 3 | 95 | 390 | / | 0 | - | 0.20 | 0.00 | Serious lithium plating | 580 |
| Comparative Example 4 | 1 | 135 | FSO$_3$Li | 1 | - | 0.007 | 0.007 | Serious lithium plating | 590 |

| No. | Bending portion | | Electrolyte solution | | | | | Lithium plating of negative electrode convex surface in first bending portion | Volumetric energy density /WhL$^{-1}$ |
|---|---|---|---|---|---|---|---|---|---|
| | R (μm) | L (μm) | Fluorosulfonat e salt and/or difluorophosp hate salt | Mass percentage w% of fluorosulfonat e salt and/or difluorophosp hate salt in electrolyte solution | Types of other additives | β | w×β | | |
| Comparative Example 5 | 350 0 | 95 | FSO$_3$Li | 22 | - | 0.97 | 21.4 2 | Grey spot | 400 |

The following can be seen from Table 1.

From example 1-1 to example 1-11, it can be seen that, with an increase of the value of R, the volumetric energy density of a lithium-ion battery decreases, and thus, in order to obtain a battery with a high energy density, the value of R should not be too large; and with a decrease of the value of R, there is slight lithium plating on a negative electrode convex surface in a first bending portion, and thus the value R cannot be too small. The value of R is preferably 2 $\mu$m to 5000 $\mu$m, more preferably 50 $\mu$m to 500 $\mu$m, and within this range, it can be guaranteed that the lithium-ion battery has the high energy density and avoids the serious lithium plating phenomenon.

From Table 1, it can be seen that, compared with the examples, lithium plating and energy density in all the comparative examples cannot be improved at the same time.

Compared with Example 1-2, Comparative example 1 is only different in that an electrolyte solution does not contain a fluorosulfonate salt/difluorophosphate salt, that is, a mass percentage w% of the fluorosulfonate salt/difluorophosphate salt in the electrolyte solution is 0. As for the results, in the evaluation result of "Corner lithium plating of negative electrode film layer", Comparative example 1 is "serious lithium plating", and compared with "slight lithium plating" in examples 1 and 2, a good corner lithium plating inhibiting effect cannot be achieved.

By comparing Comparative Example 1 to Comparative Example 3, it can be seen that, similarly, in the case that the electrolyte solution does not contain the fluorosulfonate salt and/or difluorophosphate salt, in Comparative Example 2, the value of $\beta$ is greatly increased by decreasing the value of L, and the evaluation result of "Corner lithium plating of negative electrode film layer" in comparative Example 2 is "slight lithium plating", which shows that "corner lithium plating" is improved to a certain extent. However, since in Comparative Example 2, the value of $\beta$ is increased by decreasing L, as for the result, compared with Comparative Example 1 and Reference document 3, the "volumetric energy density" is lowered.

From Comparative Example 4, it can be seen that, if the value of R is too low or the value of $\beta$ is too low, the evaluation result of "Corner lithium plating of negative electrode film layer" is "serious lithium plating", and a good corner lithium plating inhibiting effect cannot be achieved.

From Comparative Example 5, it can be seen that: if the value of R is too large, the volumetric energy density is lowered too much, and the requirement of "high energy density" of the lithium-ion battery cannot be met.

Table 2:

| | Bending portion | | Electrolyte solution | | | | | | | |
|---|---|---|---|---|---|---|---|---|---|---|
| | R (μm) | L (μm) | Fluorosulfonat e salt and/or difluorophosp hate salt | Mass percentage w% of fluorosulfonate salt and/or difluorophospha te salt in electrolyte solution | Type of other additives | β | w×β | Lithium plating of negative electrode convex surface in first bending portion | Volumetric energy density/WhL-1 | Internal resistance |
| Example 2-1 | 95 | 10 | FSO3Li | 1 | - | 0.90 | 0.90 | No lithium plating | 330 | 0.113 |
| Example 2-2 | 95 | 20 | FSO3Li | 1 | - | 0.83 | 0.83 | No lithium plating | 445 | 0.201 |
| Example 2-3 | 95 | 50 | FSO3Li | 1 | - | 0.66 | 0.66 | No lithium plating | 502 | 0.257 |
| Example 2-4 | 95 | 100 | FSO3Li | 1 | - | 0.49 | 0.49 | No lithium plating | 563 | 0.316 |
| Example 2-5 | 95 | 135 | FSO3Li | 1 | - | 0.41 | 0.41 | No lithium plating | 570 | 0.357 |
| Example 2-6 | 95 | 190 | FSO3Li | 1 | - | 0.33 | 0.33 | No lithium plating | 578 | 0.379 |
| Example 2-7 | 95 | 240 | FSO3Li | 1 | - | 0.28 | 0.28 | No lithium plating | 583 | 0.402 |
| Example 2-8 | 95 | 450 | FSO3Li | 1 | - | 0.17 | 0.17 | Grey spot | 589 | 0.532 |
| Example 2-9 | 95 | 500 | FSO3Li | 1 | - | 0.16 | 0.16 | Grey spot | 595 | 0.607 |
| Example 2-10 | 95 | 900 | FSO3Li | 1 | - | 0.10 | 0.10 | Slight lithium plating | 605 | 0.876 |
| Example 2-11 | 95 | 1100 | FSO3Li | 1 | - | 0.08 | 0.08 | Slight lithium plating | 614 | 0.955 |

From Table 2, it can be seen that, if the value of L is too small, the volumetric energy density of the lithium battery is too low; with the increase of the value of L, the volumetric energy density of the lithium battery is increased; and on the other hand, if the value of L is too large, a slight lithium plating phenomenon occurs at a corner of a negative electrode film layer, and an internal resistance of the battery is too large. From data in the table, it can be seen that the value of L is preferably 20 $\mu$m to 900 $\mu$m, more preferably 50 $\mu$m to 500 $\mu$m.

More specifically, from Example 2-1, it can be seen that if the value of L is too small, since a positive electrode active layer and a negative electrode active layer are too thin, the volumetric energy density of the lithium battery is too low; from Example 2-11, it can be seen that if the value of L is too large, the positive electrode active layer and the negative electrode active layer are too thick, a migration path of lithium ions is long, slight lithium plating occurs at a corner of the negative electrode film layer, and the internal resistance of the battery is too large; and from Example 2-2 to Example 2-10, the value of L is preferably 20 $\mu$m to 900 $\mu$m, more preferably 50 $\mu$m to 500 $\mu$m.

Table 3:

| | Bending portion | | Electrolyte solution | | | | | Lithium plating of negative electrode convex surface in first bending portion | Volumetric energy density/Wh L-1 | Internal resistance |
|---|---|---|---|---|---|---|---|---|---|---|
| | R (μm) | L (μm) | Fluorosulfonate salt and/or difluorophosphate salt | Mass percentage w% of fluorosulfonate salt and/or difluorophosphate salt in electrolyte solution | Type of other additives | β | w×β | | | |
| Example 3-1 | 95 | 135 | $FSO_3Li$ | 0.02 | - | 0.41 | 0.01 | Grey spot | 568 | 0.249 |
| Example 3-2 | 95 | 135 | $FSO_3Li$ | 0.05 | - | 0.41 | 0.02 | Grey spot | 569 | 0.351 |
| Example 3-3 | 95 | 135 | $FSO_3Li$ | 0.1 | - | 0.41 | 0.04 | No lithium plating | 570 | 0.353 |
| Example 3-4 | 95 | 135 | $FSO_3Li$ | 1 | - | 0.41 | 0.41 | No lithium plating | 570 | 0.357 |
| Example 3-5 | 95 | 135 | $FSO_3Li$ | 2 | - | 0.41 | 0.83 | No lithium plating | 572 | 0.369 |
| Example 3-6 | 95 | 135 | $FSO_3Li$ | 5 | - | 0.41 | 2.07 | No lithium plating | 571 | 0.378 |
| Example 3-7 | 95 | 135 | $FSO_3Li$ | 10 | - | 0.41 | 4.13 | No lithium plating | 569 | 0.524 |
| Example 3-8 | 95 | 135 | $FSO_3Li$ | 15 | - | 0.41 | 6.20 | No lithium plating | 567 | 0.652 |
| Example 3-9 | 95 | 135 | $FSO_3Li$ | 20 | - | 0.41 | 8.26 | No lithium plating | 566 | 0.785 |
| Example 3-10 | 95 | 135 | $FSO_3Li$ | 25 | - | 0.41 | 10.33 | No lithium plating | 563 | 0.843 |
| Example 3-11 | 95 | 60 | $FSO_3Li$ | 20 | - | 0.61 | 12.26 | No lithium plating | 519 | 0.409 |
| Example 3-12 | 500 | 80 | $FSO_3Li$ | 18 | - | 0.86 | 15.52 | No lithium plating | 515 | 0.413 |

| | Bending portion | | Electrolyte solution | | | | | | | |
|---|---|---|---|---|---|---|---|---|---|---|
| | R (μm) | L (μm) | Fluorosulf onate salt and/or difluoroph osphate salt | Mass percentage w% of fluorosulfonate salt and/or difluorophosphate salt in electrolyte solution | Type of other additiv es | $\beta$ | $w \times \beta$ | Lithium plating of negative electrode convex surface in first bending portion | Volumetric energy density/Wh L-1 | Internal resistance |
| Example 3-13 | 4000 | 200 | $FSO_3Li$ | 21 | - | 0.95 | 20.00 | No lithium plating | 513 | 0.831 |
| Example 3-14 | 4000 | 200 | $FSO_3Li$ | 0.015 | - | 0.95 | 0.0143 | Slight lithium plating | 533 | 0.398 |

The following content can be seen from Table 3.

From Examples 3-1 to 3-13, it can be seen that, adding the fluorosulfonate salt and/or difluorophosphate salt into the electrolyte solution can improve the corner lithium plating inhibiting effect.

From Examples 3-1 to 3-10, it can be seen that, when the mass percentage w% of the fluorosulfonate salt and/or difluorophosphate salt in the electrolyte solution is increased (i.e., the value of w is increased), the internal resistance of the battery will be increased. In addition, from Example 3-14, it can be seen that if the mass percentage w% of the fluorosulfonate salt and/or difluorophosphate salt in the electrolyte solution is too low, the corner lithium plating inhibiting effect is not obvious.

From Examples 3-1 to 3-14 in Table 3, it can be seen that, in the present application, w% of the fluorosulfonate salt and/or difluorophosphate salt is 0.02% to 25%, preferably 0.02% to 20%, more preferably 0.5% to 10%, and further preferably 0.1% to 5%. In addition, from a comparison of Example 3-9 with Example 3-11 in Table 3, it can be seen that, by lowering the value of L, the internal resistance of the battery can also be lowered.

Table 4:

| | Bending portion | | Electrolyte solution | | | | | | | | |
|---|---|---|---|---|---|---|---|---|---|---|---|
| | R (μm) | L (μm) | Fluorosulfonate salt and/or difluorophosphate salt | Mass percentage w% of fluorosulfonate salt and/or difluorophosphate salt in electrolyte solution | Type of other additives | β | w×β | Lithium plating of negative electrode convex surface in first bending portion | Volumetric energy density/Wh L-1 | Capacity retention rate after 1000 cycles at 25°C | Capacity retention rate after 800 cycles at 45°C |
| Example 4-1 | 95 | 135 | $FSO_3Na$ | 1 | - | 0.41 | 0.41 | No lithium plating | 570 | / | / |
| Example 4-2 | 95 | 135 | $FSO_3K$ | 1 | - | 0.41 | 0.41 | No lithium plating | 570 | / | / |
| Example 4-3 | 95 | 135 | $FSO_3Cs$ | 1 | - | 0.41 | 0.41 | No lithium plating | 570 | / | / |
| Example 4-4 | 95 | 135 | $F_2PO_2Li$ | 1 | - | 0.41 | 0.41 | No lithium plating | 570 | 78% | 72% |
| Example 4-5 | 95 | 135 | $F_2PO_2Na$ | 1 | - | 0.41 | 0.41 | No lithium plating | 570 | / | / |
| Example 4-6 | 95 | 135 | $F_2PO_2K$ | 1 | - | 0.41 | 0.41 | No lithium plating | 570 | / | / |
| Example 4-7 | 95 | 135 | $FSO_3Li$ | 1 | 1% fluoroethylene carbonate | 0.41 | 0.41 | No lithium plating | 570 | 85% | 79% |
| Example 4-8 | 95 | 135 | $FSO_3Li$ | 1 | 1% 1,3-propanesultone | 0.41 | 0.41 | No lithium plating | 570 | 84% | 80% |
| Example 4-9 | 95 | 135 | $FSO_3Li$ | 1 | 0.01% 1,3-propanesultone | 0.41 | 0.41 | No lithium plating | 570 | 80% | 73% |
| Example 4-10 | 95 | 135 | $FSO_3Li$ | 1 | 0.05% 1,3-propanesultone | 0.41 | 0.41 | No lithium plating | 570 | 81% | 75% |
| Example 4-11 | 95 | 135 | $FSO_3Li$ | 1 | 0.1% 1,3-propanesultone | 0.41 | 0.41 | No lithium plating | 570 | 83% | 78% |

| | Bending portion | | Electrolyte solution | | | | | | | | |
|---|---|---|---|---|---|---|---|---|---|---|---|
| | R (μm) | L (μm) | Fluorosulfonate salt and/or difluorophosphate salt | Mass percentage w% of fluorosulfonate salt and/or difluorophosphate salt in electrolyte solution | Type of other additives | $\beta$ | $w\times\beta$ | Lithium plating of negative electrode convex surface in first bending portion | Volumetric energy density/Wh L-1 | Capacity retention rate after 1000 cycles at 25°C | Capacity retention rate after 800 cycles at 45°C |
| Example 4-12 | 95 | 135 | $FSO_3Li$ | 1 | 2% 1,3-propanesultone | 0.41 | 0.41 | No lithium plating | 570 | 85% | 82% |
| Example 4-13 | 95 | 135 | $FSO_3Li$ | 1 | 5% 1,3-propanesultone | 0.41 | 0.41 | No lithium plating | 570 | 84% | 79% |
| Example 4-14 | 95 | 135 | $FSO_3Li$ | 1 | 10% 1,3-propanesultone | 0.41 | 0.41 | No lithium plating | 570 | 83% | 74% |
| Example 4-15 | 95 | 135 | $FSO_3Li$ | 1 | 15% 1,3-propanesultone | 0.41 | 0.41 | No lithium plating | 570 | 83% | 70% |

The following can be seen from Table 4.

From Examples 4-7 to 4-15: when fluoroethylene carbonate and/or 1,3-propanesultone is added into the electrolyte solution containing the fluorosulfonate salt and/or difluorophosphate salt, the high and low temperature cycling performance of the lithium-ion battery can be further improved.

In the present application, when the fluoroethylene carbonate and/or 1,3-propanesultone is added into the electrolyte solution containing the fluorosulfonate salt and/or difluorophosphate salt, considering from the point of improving the cycling performance of the battery, a percentage mass content of the fluoroethylene carbonate and/or 1,3-propanesultone in the electrolyte solution is 0.01% to 15%, preferably 0.05% to 5%, and further preferably 0.1% to 2%.

Table 5:

| | Bending portion | | | Electrolyte solution | | | | | | |
| | R (μm) | L (μm) | Porosity of negative electrode material layer | Fluorosulfonate salt and/or difluorophosphate salt | Mass percentage w% of fluorosulfonate salt and/or difluorophosphate salt in electrolyte solution | Type of other additives | β | w×β | Lithium plating of negative electrode convex surface in first bending portion | Volumetric energy density/WhL$^{-1}$ |
|---|---|---|---|---|---|---|---|---|---|---|
| Example 5-1 | 95 | 135 | 5% | $F_2PO_2Na$ | 1 | - | 0.41 | 0.41 | Slight lithium plating | 569 |
| Example 5-2 | 95 | 135 | 10% | $F_2PO_2Na$ | 1 | - | 0.41 | 0.41 | Slight lithium plating | 577 |
| Example 5-3 | 95 | 135 | 20% | $F_2PO_2Na$ | 1 | - | 0.41 | 0.41 | Grey spot | 575 |
| Example 5-4 | 95 | 135 | 30% | $F_2PO_2Na$ | 1 | - | 0.41 | 0.41 | No lithium plating | 570 |
| Example 5-5 | 95 | 135 | 40% | $F_2PO_2Na$ | 1 | - | 0.41 | 0.41 | No lithium plating | 565 |
| Example 5-6 | 95 | 135 | 50% | $F_2PO_2Na$ | 1 | - | 0.41 | 0.41 | No lithium plating | 561 |
| Example 5-7 | 95 | 135 | 60% | $F_2PO_2Na$ | 1 | - | 0.41 | 0.41 | No lithium plating | 553 |

From Table 5, it can be seen that: in the lithium-ion battery, on the premise of keeping that the lithium-ion battery has the relatively high energy density (560-580 WhL$^{-1}$), according to lithium plating of the negative electrode convex surface in the first bending portion, the porosity of the negative electrode material layer may be preferably 20% to 50%, more preferably 30% to 50%.

To sum up, from Examples 1-1 to 1-11 in Table 1, Examples 2-1 to 2-11 in Table 2, Examples 3-1 to 3-14 in Table 3, Examples 4-1 to 4-15 in Table 4 and Examples 5-1 to 5-7 in Table 5, it can be seen that: when a product of the mass percentage w of the fluorosulfonate salt and/or difluorophosphate salt in the electrolyte solution and a corner lithium plating coefficient β at the innermost circle is 0.01 to 20, especially in a range of 0.05 to 10, it can be guaranteed that the battery has the high energy density, and there are enough additives to inhibit corner lithium plating of the negative electrode convex surface. Meanwhile, when the use amount of the fluorosulfonate salt and/or difluorophosphate salt is moderate, the good normal temperature internal resistance of the lithium-ion battery is guaranteed.

It should be noted that the present application is not limited to the embodiments above. The examples within the scope of the present application are obviously inexhaustible, the above embodiments are only examples, and within the scope of the technical solution of the present application, embodiments with the same composition and the same effect as the technical idea are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1. A lithium-ion battery, comprising: an electrode assembly and an electrolyte solution for impregnating the electrode assembly, wherein

   the electrode assembly comprises a negative electrode sheet, a separator and a positive electrode sheet, and the negative electrode sheet, the separator and the positive electrode sheet are wound into a wound structure in a winding direction, and wherein the wound structure comprises an arc bending portion;
   the arc bending portion at least comprises: a first bending portion and a second bending portion;
   the first bending portion is an innermost arc bending portion formed by winding the negative electrode sheet, and comprises a negative electrode current collector and a negative electrode material layer at least located on a convex surface of the negative electrode current collector;
   the second bending portion is located on an outer side of the first bending portion and adjacent to the first bending portion with the separator being therebetween, and comprises a positive electrode current collector and a positive electrode material layer at least located on a concave surface of the positive electrode current collector;
   a corner lithium plating coefficient of the lithium-ion battery is set to be β, and β satisfies the following formula I:

   $$\beta = R/(R+L) \qquad \text{formula I,}$$

   and 0.015≤β≤0.95, wherein
   R is a minimum curvature radius of the convex surface of the negative electrode current collector of the first bending portion, and
   L is a shortest distance between the convex surface of the negative electrode current collector of the first bending portion and the concave surface of the positive electrode current collector of the second bending portion;
   the electrolyte solution contains a fluorosulfonate salt and/or difluorophosphate salt substance; and
   a percentage mass content w% of the fluorosulfonate salt and/or difluorophosphate salt substance in the electrolyte solution and the corner lithium plating coefficient β satisfy the following formula II:

   $$0.01 \leq w \times \beta \leq 20 \qquad \text{formula II.}$$

2. The lithium-ion battery according to claim 1, wherein

   $$0.02 \leq w \times \beta \leq 5.$$

3. The lithium-ion battery according to claim 1 or 2, wherein

$$0.15 \leq \beta \leq 0.8.$$

4. The lithium-ion battery according to any one of claims 1-3, wherein
a range of R is 2 $\mu$m to 5000 $\mu$m, optionally 50 $\mu$m to 500 $\mu$m.

5. The lithium-ion battery according to any one of claims 1-4, wherein
a range of L is 20 $\mu$m to 900 $\mu$m, optionally 50 $\mu$m to 500 $\mu$m.

6. The lithium-ion battery according to any one of claims 1-5, wherein

a structural formula of the fluorosulfonate salt is $(FSO_3)_x M^{x+}$, wherein $M^{x+}$ is selected from one or two more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$, and
a structural formula of the difluorophosphate salt is $(F_2PO_2)_y M^{y+}$, wherein $M^{y+}$ is selected from one or two more of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

7. The lithium-ion battery according to any one of claims 1-6, wherein
a percentage mass content w% of the fluorosulfonate salt and/or difluorophosphate salt substance in the electrolyte solution has a range of 0.02% to 25%, preferably a range of 0.02% to 20%, optionally, more preferably a range of 0.05% to 10%, and further optionally a range of 0.1% to 5%.

8. The lithium-ion battery according to any one of claims 1-7, wherein
the electrolyte solution further contains fluoroethylene carbonate and/or 1,3-propanesultone, and a percentage mass content of the fluoroethylene carbonate and/or 1,3-propanesultone in the electrolyte solution is 0.01% to 15%, optionally 0.05% to 5%, and further optionally 0.1% to 2%.

9. The lithium-ion battery according to any one of claims 1-8, wherein
a porosity of the negative electrode active layer is 20% to 50%, optionally 30% to 50%.

10. A battery module, comprising the lithium-ion battery according to any one of claims 1-9.

11. A battery pack, comprising one or more of the lithium-ion battery according to any one of claims 1-9 or the battery module according to claim 10.

12. A powered device, comprising one or more of the lithium-ion battery according to any one of claims 1-9, the battery module according to claim 10 or the battery pack according to claim 11.

<u>6</u>

**FIG. 1**

<u>5</u>

**FIG. 2**

**FIG. 3**

**FIG. 4**

**FIG. 5**

**FIG. 6**

**FIG. 7**

## INTERNATIONAL SEARCH REPORT

| International application No. |
| --- |
| **PCT/CN2021/097528** |

| **A.** | **CLASSIFICATION OF SUBJECT MATTER** |
| --- | --- |

H01M 10/0587(2010.01)i;  H01M 10/0567(2010.01)i

According to International Patent Classification (IPC) or to both national classification and IPC

| **B.** | **FIELDS SEARCHED** |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABSC; VEN; ENTXT; ENTXTC; CNKI: 电池, 卷绕, 最内, 负极, 阳极, 弯折, 弯曲, 拐角, 曲率, 半径, 电解液, 氟磺酸锂, 二氟磷酸锂, 质量, 含量, battery, cell, wind, innermost, negative electrode, anode, bend, corner, curvature, radius, electrolyte, lithium fluorosulfonate, lithium difluorophosphate, mass, content

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | CN 111934027 A (DONGGUAN CHAM BATTERY TECHNOLOGY CO., LTD.) 13 November 2020 (2020-11-13)<br>description, paragraphs 2 and 38-74, and figures 1-5 | 1-12 |
| Y | CN 112234252 A (SHANSHAN ADVANCED MATERIALS (QUZHOU) CO., LTD.) 15 January 2021 (2021-01-15)<br>description, paragraphs 5-25 | 1-12 |
| Y | CN 110556566 A (TOYOTA MOTOR CORP.) 10 December 2019 (2019-12-10)<br>description, paragraphs 48-103 | 1-12 |
| A | JP 2009245839 A (SANYO ELECTRIC CO., LTD.) 22 October 2009 (2009-10-22)<br>entire document | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 December 2021** | **28 January 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/097528**

| Patent document cited in search report | | | Publication date (day/month/year) | Patent family member(s) | | | Publication date (day/month/year) |
|---|---|---|---|---|---|---|---|
| CN | 111934027 | A | 13 November 2020 | CN | 212461796 | U | 02 February 2021 |
| CN | 112234252 | A | 15 January 2021 | None | | | |
| CN | 110556566 | A | 10 December 2019 | RU | 2705569 | C1 | 08 November 2019 |
| | | | | US | 2019372176 | A1 | 05 December 2019 |
| | | | | KR | 20190137704 | A | 11 December 2019 |
| | | | | KR | 102217936 | B1 | 19 February 2021 |
| | | | | BR | 102019011126 | A2 | 17 December 2019 |
| | | | | JP | 2019212419 | A | 12 December 2019 |
| | | | | EP | 3576189 | A1 | 04 December 2019 |
| | | | | IN | 201914021554 | A | 06 December 2019 |
| JP | 2009245839 | A | 22 October 2009 | JP | 5311861 | B2 | 09 October 2013 |

Form PCT/ISA/210 (patent family annex) (January 2015)